# EUROPEAN PATENT APPLICATION

(11) **EP 2 985 707 A1**
(43) Date of publication of application: **17.02.2016**
(21) Application number: 15180998.5
(22) Date of filing: 13.08.2015
(51) Int. Cl.: G06F 17/30, H04L 29/08

(54) **METHOD AND APPARATUS FOR FINDING FILE IN STORAGE DEVICE AND ROUTER AND MEDIUM**

(30) Priority: 15.08.2014 CN 201410404053
(71) Applicant: Xiaomi Inc., Beijing 100085 (CN)
(72) Inventor: CHEN, Xianlin, 100085 Haidian District (CN); LI, Zheng, 100085 Haidian District (CN); LIU, Tiejun, 100085 Haidian District (CN)
(74) Representative: Reeve, Nicholas Edward

(57) **Abstract**

The present disclosure relates to a method and an apparatus for finding a file in a storage device, and a router, and belongs to a field of Internet technology. The method includes: establishing an index for a specified file in the storage device according to file classifications which are divided according to file types or an identification of a device for uploading the file, the storage device being a storage device configured in the router; and providing a classified view of the specified file for a user device, the classified view including identifications of the respective file classifications. The present disclosure provides the classification of the specified file for the user device by according to file types or the identification of the device for uploading the file, so that different user devices may more flexibly perform classification finding when viewing files in the storage device of the router, whereby it is convenient for a user to find the file, the operation is simple and efficient, and the user's experience is good.

## Description

### TECHNICAL FIELD

The present disclosure relates to a field of Internet technology, and more particularly to a method and an apparatus for finding a file in a storage device, and a router.

### BACKGROUND

Nowadays, in addition to having basic routing and forwarding functions, a router is slowly transforming to become a family data center. A user begins to back up data of a device, such as a mobile phone, a camera and the like, to the router to realize data sharing.

In the related art, the router may realize data sharing through Samba, (a Linux based program for sharing files). When data is shared through Samba, a data file is displayed according to a directory structure in the router. When browsing a file on the router, the user must know a path of the file, and then enter into the directory level by level to find it, whereby the operation is quite cumbersome.

### SUMMARY OF THE INVENTION

In order to overcome the problems of the complex operation existing in the related art, the present disclosure provides a method and an apparatus for finding a file in a storage device, and a router.

According to a first aspect of the embodiments of the present disclosure, there is provided a method for finding a file in a storage device, the method is applied in the router, the method includes: establishing an index for a specified file in the storage device according to file classifications which are divided according to file types or an identification of a device for uploading the file, the storage device being a storage device configured in the router; and providing a classified view of the specified file for a user device, the classified view including identifications of the respective file classifications.

In a possible implementation of the present disclosure, establishing the index for the specified file in the storage device according to the file classifications uses the following manners: acquiring information of the specified file which includes one or more of a path of the file, a hash value of the file, a name of the file, a multipurpose Internet mail extensions MIME type of the file, a creation date of the file, a modification time of the file, an identification of the user device, a size of the file and a thumbnail of the file; and establishing the index respectively for the specified file corresponding to the respective file types and the identification of the device for uploading the file according to the information of the specified file.

In another possible implementation of the present disclosure, the providing the classified view of the specified file for the user device uses the following manners: receiving a file finding request sent by the user device; and sending the classified view to the user device; or, the providing the classified view of the specified file for the user device uses the following steps: receiving a file finding request sent by the user device; sending an option of a finding manner to the user device, the finding manner including a classification finding, a search finding or a directory finding; receiving the finding manner sent by the user device; and sending the classified view to the user device when the finding manner sent by the user device is the classification finding.

In a further possible implementation of the present disclosure, the method further includes: receiving the identification of the file classifications sent by the user device; sorting a first file which is the specified file corresponding to the identifications of the file classifications sent by the user device, by using an index established for a first file; and sending an arrangement view of the sorted first file to the user device, the arrangement view of the first file including at least a name of the first file.

In a further possible implementation of the present disclosure, the arrangement view of the first file further includes one or more of a multipurpose Internet mail extensions MIME type of the first file, a size of the first file, a path of the first file, a uniform resource locator URL of the first file, a URL of a thumbnail of the first file and a creation time of the first file.

In a further possible implementation of the present disclosure, the using the index established for the first file, sorting the first file uses the following steps: sorting the first file according to the creation time of the first file when the first file is a picture; sorting the first file according to the name of the first file when the first file is an audio; sorting the first file according to the creation time of the first file when the first file is a video; and sorting the first file according to a modification time of the first file when the first file is a text.

In a further possible implementation of the present disclosure, the method further includes: receiving the finding manner sent by the user device, the finding manner including the classification finding, the search finding or the directory finding; find a second file, which is the specified file corresponding to the identification of the device for uploading the file found by the user device, by using an index established for the second file, and sending an arrangement view of the second file to the user device when the finding manner is the search finding; sending a directory structure of the specified file to the user device when the finding manner is the directory finding; and providing the classified view for the user device when the finding manner is the classification finding.

In a further possible implementation of the present disclosure, the method further includes: monitoring a new added file in the storage device; and establishing an index for the new added file according to the file classifications when the new added file is different from the stored file in the storage device.

According to a second aspect of the embodiments of the present disclosure, there is provided an apparatus for finding a file in a storage device, which is applied in the router and includes: an index establishing module configured to establish an index for a specified file in the storage device according to file classifications which are divided according to file types or an identification of a device for uploading the file, the storage device being a storage device configured in the router; and a view providing module configured to provide a classified view of the specified file for a user device, the classified view including identifications of the respective file classifications.

In a possible implementation of the present disclosure, the index establishing module is configured to: acquire information of the specified file which includes one or more of a path of the file, a hash value of the file, a name of the file, a multipurpose Internet mail extensions MIME type of the file, a creation date of the file, a modification time of the file, an identification of the user device, a size of the file and a thumbnail of the file; and establish the index respectively for the specified file corresponding to the respective file types and the identification of the device for uploading the file according to the information of the specified file.

In another possible implementation of the present disclosure, the view providing module is configured to: receive a file finding request sent by the user device; and send the classified view to the user device; or, receive a file finding request sent by the user device; send an option of a finding manner to the user device, the finding manner including a classification finding, a search finding or a directory finding; receive the finding manner sent by the user device; and send the classified view to the user device when the finding manner sent by the user device is the classification finding.

In a further possible implementation of the present disclosure, the apparatus further includes: a receiving module configured to receive the identification of the file classifications sent by the user device; a file sorting module configured to sort a first file which is the specified file corresponding to the identification of the file classifications sent by the user device, by using an index established for the first file; and the view providing module is further configured to send an arrangement view of the sorted first file to the user device, the arrangement view of the first file including at least a name of the first file.

In a further possible implementation of the present disclosure, the arrangement view of the first file further includes one or more of a multipurpose Internet mail extensions MIME type of the first file, a size of the first file, a path of the first file, a uniform resource locator URL of the first file, a URL of a thumbnail of the first file and a creation time of the first file.

In a further possible implementation of the present disclosure, the file sorting module is configured to: sort the first file according to the creation time of the first file when the first file is a picture; sort the first file according to the name of the first file when the first file is an audio; sort the first file according to the creation time of the first file when the first file is a video; and sort the first file according to a modification time of the first file when the first file is a text.

In a further possible implementation of the present disclosure, the apparatus further includes: a receiving module configured to receive the finding manner sent by the user device, the finding manner including the classification finding, the search finding or the directory finding; and wherein the view providing module is further configured to find a second file , which is the specified file corresponding to the identification of the device for uploading the file found by the user device, by using an index established for the second file, and send an arrangement view of the second file to the user device when the finding manner is the search finding; send a directory structure of the specified file to the user device when the finding manner is the directory finding; and provide the classified view for the user device when the finding manner is the classification finding.

In a further possible implementation of the present disclosure, the apparatus further includes: a file monitoring module configured to monitor a new added file in the storage device; and wherein the index establishing module is further configured to establish an index for the new added file according to the file classifications when the new added file is different from the stored file in the storage device.

According to a third aspect of the embodiments of the present disclosure, there is provided a router, including: a processor; and a memory for storing instructions executable by the processor; wherein the processor is configured to perform: establishing an index for a specified file in the storage device according to file classifications which are divided according to file types or an identification of a device for uploading the file, the storage device being a storage device configured in the router; and providing a classified view of the specified file for a user device, the classified view including identifications of the respective file classifications.

The technical solutions provided by the embodiments of the present disclosure may include the following advantageous effects: by establishing an index for a specified file in the storage device according to file classifications which are divided according to file types or an identification of a device for uploading the file; and providing a classified view of the specified file for a user device, the classified view including identifications of the respective file classifications, the file finding manner is combined with the storage device of the router, so that different user devices may more flexibly perform a classification finding when viewing the file in the storage device of the router, for example, different user devices may classify according to file types and file source, whereby it is convenient for the user to find the file in the storage device of the router, the operation is simple and efficient, and the user's experience is good.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an application scenarios diagram illustrating a method for finding a file in a storage device according to an exemplary embodiment.
Fig. 2 is a flow chart illustrating a method for finding a file in a storage device according to an exemplary embodiment.
Fig. 3 is a flow chart illustrating a method for finding a file in a storage device according to another exemplary embodiment.
Fig. 4 is a diagram illustrating a terminal interface when a finding begins according to another exemplary embodiment.
Fig. 5 is a diagram illustrating another terminal interface when a finding begins according to another exemplary embodiment.
Fig. 6 is a diagram illustrating a terminal interface after a classification finding begins according to another exemplary embodiment.
Fig. 7 is a diagram illustrating a terminal interface after a directory finding begins according to another exemplary embodiment.
Fig. 8 is a diagram illustrating a terminal interface when a search finding begins according to another exemplary embodiment.
Fig. 9 is a block diagram illustrating an apparatus for finding a file in a storage device according to an exemplary embodiment.
Fig. 10 is a block diagram illustrating an apparatus for finding a file in a storage device according to another exemplary embodiment.
Fig. 11 is a block diagram illustrating an apparatus for finding a file in a storage device according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

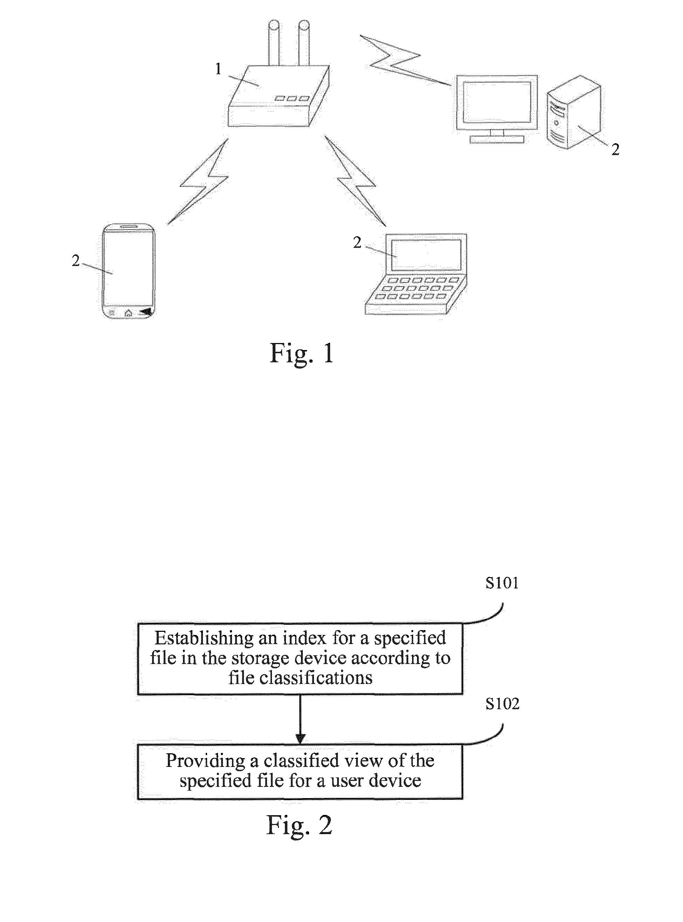

Now, an application scenario of a method for finding a file in a storage device provided by the present disclosure is simply introduced with reference to Fig. 1. As shown in Fig. 1, a storage device 1 is wired or wireless connected with several terminals 2 respectively, so as to form a LAN (Local Area Network). The storage device 1 is a data center of the LAN, the terminal 2 may transfer data to the storage device 1 for backup and sharing. Herein, the storage device 1 may be configured in the router or other storage devices with computation function, and the terminal 2 may be a mobile phone, a notebook computer, a table computer, and the like. The present disclosure is not limited thereto.

It should be noted that, the application scenario shown in Fig. 1 is only an example, and the present disclosure is not limited thereto.

Fig. 2 is a flow chart illustrating a method for finding a file in a storage device according to an exemplary embodiment, which is applied in a router. As shown in Fig. 2, the method for finding the file in the storage device is used in the storage device, and includes the following steps.

In step S101, an index is established for a specified file in the storage device according to file classifications.

In the present embodiment, the file classifications are divided according to file types or an identification of a device for uploading the file. File types may include one or more of a picture, an audio, a video and a text. The storage device is a storage device configured in the router.

In the practical application, step S101 maybe performed when the storage device starts, or may also be performed when the file in the storage device is updated, and the present disclosure is not limited thereto.

In step S102, a classified view of the specified file is provided for a user device.

In the present embodiment, the classified view (classification view) includes an identification of the classification of each file. When the file classifications are divided according to file types, the identifications of the file classifications are identifications of file types, for example, the picture, the audio, the video and the text. When the file classifications are divided according to the identification of the device for uploading the file, the identifications of the file classifications are the identification of the device for uploading the file.

The embodiments of the present disclosure establishes an index for a specified file in the storage device according to file classifications which are divided according to file types or an identification of a device for uploading the file; and provides a classified view of the specified file for a user device, the classified view including identifications of the respective file classifications, the file finding manner is combined with the storage device of the router, so that different user devices may more flexibly perform a classification finding when viewing the file in the storage device of the router, for example, different user devices may classify according to file types and file source, whereby it is convenient for the user to find the file in the storage device of the router, the operation is simple and efficient, and the user's experience is good.

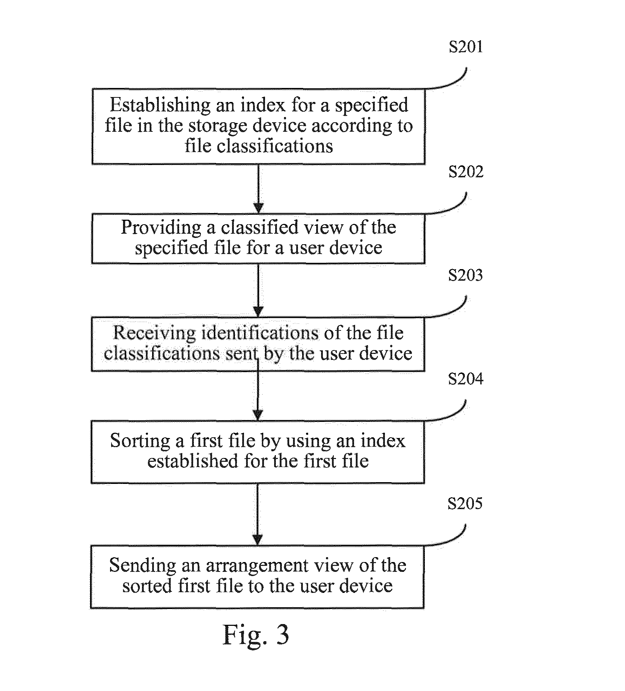

Fig. 3 is a flow chart illustrating a method for finding a file in a storage device according to another exemplary embodiment, which is applied in a router. As shown in Fig. 3, the method for finding the file in the storage device is used in a terminal, and includes the following steps.

In step 201, an index is established for a specified file in the storage device according to file classifications.

In the present embodiment, the file classifications are divided according to file types or an identification of a device for uploading the file. File types may include one or more of a picture, an audio, a video and a text. The identification of the device for uploading the file may include one or more of a number of the device, a name of the device and a type of the device. The storage device is a storage device configured in the router.

In the practical application, step S102 may be performed when the storage device starts, or may also be performed when the file in the storage device is updated, the present disclosure is not limited thereto.

The specified file may be all files in the storage device, or may also be a file in a directory specified by the user or a memory, such as a file uploaded by the user device, and the present disclosure is not limited thereto. A database may be specially established to save an established index.

In an implementation of the present embodiment, the step S201 may include: acquiring information of the specified file which includes one or more of a path of the file, a hash value of the file, a name of the file, a multipurpose Internet mail extensions (referred to as MIME) type of the file, a creation date of the file, a modification time of the file, an identification of the user device, a size of the file and a thumbnail of the file; and establishing the index respectively for the specified file corresponding to the respective file types and the identification of the device for uploading the file according to the information of the specified file.

In step S202, a classified view of the specified file is provided for a user device.

In the present embodiment, the classified view includes an identification of the classification of each file. When the file classifications are divided according to file types, the identification of the file classifications are identifications of file types, for example, the picture, the audio, the video and the text. When the file classifications are divided according to the identification of the device for uploading the file, the identifications of the file classifications are the identification of the device for uploading the file.

In an implementation of the present embodiment, the step S202 may include: receiving a file finding request sent by the user device; and sending the classified view to the user device.

In another implementation of the present embodiment, step S202 may include: receiving a file finding request sent by the user device; sending an option of a finding manner to the user device, the finding manner including a classification finding, a search finding or a directory finding; receiving the finding manner sent by the user device; and sending the classified view to the user device when the finding manner sent by the user device is the classification finding.

In the practical application, a Web server program may be started in the storage device, the Web server program may provide the terminal interface including the options of the classified view, the finding manner and the like of the specified file for the user device by the way of http.

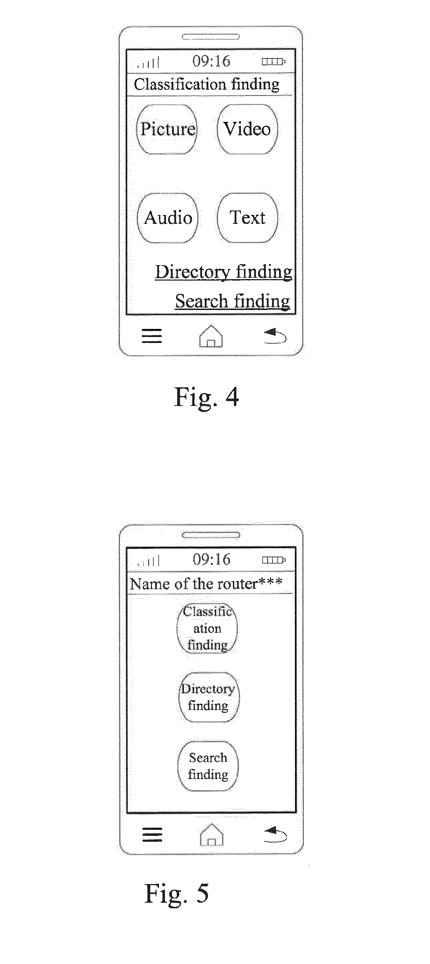

The classification finding may be used as a default finding or file navigation manner, the classified view is directly sent to the user device after receiving the file finding request sent by the user device, meanwhile, the option switched to the directory finding or the search finding may also be provided, as shown in Fig. 4. The option of the finding manner may also be sent to the user device after receiving the file finding request sent by the user device, as shown in Fig. 5.

In step S203, the identification of the file classifications sent by the user device is received.

In step S204, an index established for a first file is used, the first file is sorted.

In the present embodiment, the first file is the specified file corresponding to the identification of the file classifications sent by the user device.

In an implementation of the present embodiment, step S204 may include: sorting the first file according to the creation time of the first file when the first file is a picture; sorting the first file according to the name of the first file when the first file is an audio; sorting the first file according to the creation time of the first file when the first file is a video; and sorting the first file according to a modification time of the first file when the first file is a text.

It is understood that, the picture is generally a photograph shoot by the user, the video is generally an image shoot by the user. In general, the shooting time (i.e., the creation time of the file) of the photograph and the image shoot for the same place, the same event or the same purpose is adjacent, and thus when the picture and the video are found, the file is arranged according to the creation time of the file (for example, from nearest to farthest), whereby it is convenient for the user to find the file. The audio is generally a user's favorite music. In general, the user uses a name of the music (i.e., the name of the file) to find the audio, and the audio is arranged according to the name of the file (for example, an alphabetical order), whereby it is convenient for the user to find the file. The text (such as pdf, ppt, word, excel, wps) is related to a user's work, and in general, the closer the modification time is, the higher the frequency of the use is. The text is arranged according to the modification time of the file (for example, from nearest to farthest), whereby it is more convenient to use.

In other implementation, a set sequence may also be set by the user, and the present disclosure is not limited thereto. In the practical application, the set sequence may be specified through Structured Query Language (referred to as SQL) statements.

In step S205, an arrangement view of the sorted first file is sent to the user device.

In the present embodiment, the arrangement view of the first file includes at least a name of the first file. The arrangement view of the first file may further include one or more of a multipurpose Internet mail extensions MIME type of the first file, a size of the first file, a path of the first file, a uniform resource locator (referred to as URL) of the first file, a URL of a thumbnail of the first file and a creation time of the first file.

In the practical application, the user device will actively send the number of the returned information such as the name of the first file and the like, and the returned location of the information such as the name of the first file and the like at the beginning, for example, a hundred of the names of the first file are returned from the beginning of the name of the first file.

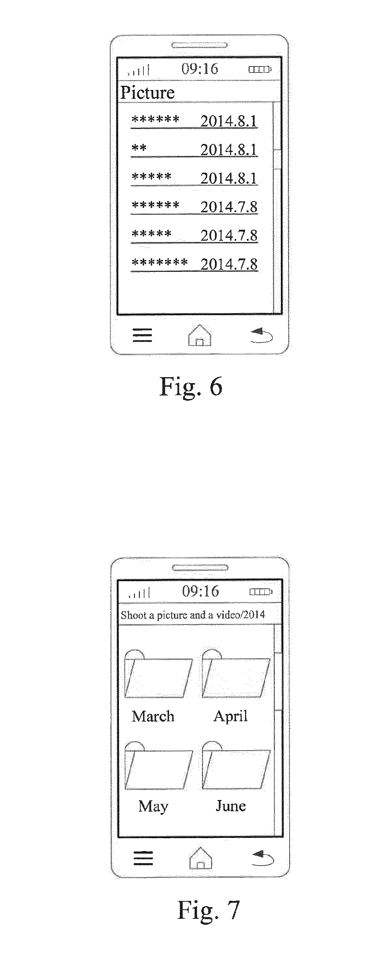

Fig. 6 is a schematic diagram of a terminal interface after executing step S205, which is only an example. The user may click the corresponding part to link to the corresponding file in the storage device.

In a further implementation of the present embodiment, the method may further include: receiving the finding manner sent by the user device, the finding manner including the classification finding, the search finding or the directory finding; using an index established for a second file to find the second file and sending an arrangement view of the second file to the user device when the finding manner is the search finding, the second file is the specified file corresponding to the identification of the device for uploading the file found by the user device; sending a directory structure of the specified file to the user device when the finding manner is the directory finding; and providing the classified view for the user device when the finding manner is the classification finding.

In the practical application, when the finding manner sent by the user device is the directory finding, the directory structure of the specified file is sent to the user device, as shown in Fig. 7. It should be noted that, when performing the directory finding, the user may access and find the file level by level from a root directory according to the path of the file. Herein, the directory structure of the picture and the video shoot by the user is classified according to year, month and day in the shooting time.

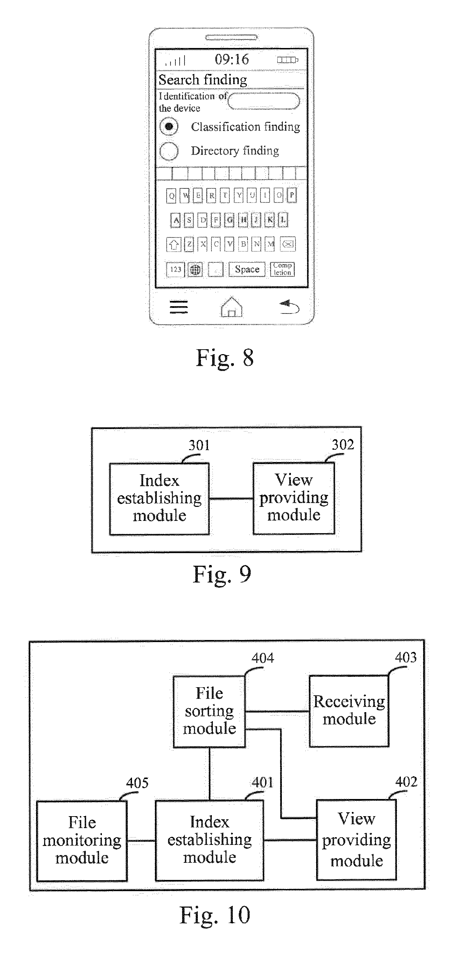

When the finding manner sent by the user device is the search finding, the interface of the identification of the device for uploading the file is provided for the user device, as shown in Fig. 8. When the identification of the device for uploading the file required to be searched is input in an input box, the user may also select the arrangement view of the file through the options of the classification finding and the directory finding.

In a further implementation of the present embodiment, the method may further include: monitoring a new added file in the storage device; and establishing an index for the new added file according to the file classifications when the new added file is different from the stored file in the storage device.

In the practical application, whether the new added file is different from the stored file in the storage device may be decided according to the hash value or the identification of the device for uploading the file. Since the hash value is unique and extremely compact numerical representation for a piece of data, the duplicate files are deleted according to the hash value, the use of which is convenient and the reliability is higher. If when the hash value of the new added file is different from the hash value of the stored file in the storage device, or, when the identification of the device for uploading the new added file is different from the identification of the device for uploading the stored file in the storage device, it is decided that the new added file is different from the stored file in the storage device.

When the new added file is the same as the stored file in the storage device, the new added file is deleted, so as to avoid establishing two or more indexes for the same file, thus, the occupation of the physical space and the influence of the index maintenance speed are reduced.

When uploading the new added file, the user device may upload the identification of the device for the storage device. The storage device provides some metadata information through the algorithm supported by the operating system or the file itself, acquires the information of the file from the new added file and the identification of the device for uploading the new added file, and establishes the index for the new added file according to the file classifications.

A file system may be monitored when the storage device is started, for example, an update of the file in the storage device may be known by using an inotify function (which is a system request of Linux), and for example, a backup of the file may be made by the user using Samba, http (Hypertext Transfer Protocol) service.

The embodiments of the present disclosure establishes an index for a specified file in the storage device according to file classifications which are divided according to file types or an identification of a device for uploading the file, and provides a classified view of the specified file for a user device, the classified view including identifications of the respective file classifications. Such the file finding manner is combined with the storage device of the router, so that different user devices may more flexibly perform a classification finding when viewing the file in the storage device of the router, for example, different user devices may classify according to file types and file source, whereby it is convenient for the user to find the file in the storage device of the router, the operation is simple and efficient, and the user's experience is good. And, as for the specified file corresponding to different file types, the arrangement view thereof may be listed according to different orders, thereby finding the file more conveniently, and improving the user's experience. Moreover, the searching and filtering may also be made according to the identification of the device for uploading the file, thereby narrowing the finding range by the user, saving the time found by the user, and further improving the user's experience.

Fig. 9 is a block diagram illustrating an apparatus for finding a file in a storage device according to an exemplary embodiment. The apparatus is applied in the router. Referring to Fig. 9, the apparatus includes an index establishing module 301 and a view providing module 302.

The index establishing module 301 is configured to establish an index for a specified file in the storage device according to file classifications which are divided according to file types or an identification of a device for uploading the file, the storage device being a storage device configured in the router

The view providing module 302 is configured to provide a classified view of the specified file for a user device, the classified view including identifications of the respective file classifications.

The embodiments of the present disclosure establishes an index for a specified file in the storage device according to file classifications which are divided according to file types or an identification of a device for uploading the file; and provides a classified view of the specified file for a user device, the classified view including identifications of the respective file classifications, the file finding manner is combined with the storage device of the router, so that different user devices may more flexibly perform a classification finding when viewing the file in the storage device of the router, for example, different user devices may classify according to file types and file source, it is convenient for the user to find the file in the storage device of the router, the operation is simple and efficient, and the user's experience is good.

Fig. 10 is a block diagram illustrating an apparatus for finding a file in a storage device according to another exemplary embodiment. The apparatus is applied in the router. Referring to Fig. 10, the apparatus includes an index establishing module 401 and a view providing module 402.

The index establishing module 401 is configured to establish an index for a specified file in the storage device according to file classifications which are divided according to file types or an identification of a device for uploading the file, the storage device being a storage device configured in the router

The view providing module 402 is configured to provide a classified view of the specified file for a user device, the classified view including identifications of the respective file classifications.

In an implementation of the present embodiment, the index establishing module 401 may be configured to: acquire information of the specified file which includes one or more of a path of the file, a hash value of the file, a name of the file, a multipurpose Internet mail extensions MIME type of the file, a creation date of the file, a modification time of the file, an identification of the user device, a size of the file and a thumbnail of the file; and

establish the index respectively for the specified file corresponding to the respective file types and the identification of the device for uploading the file according to the information of the specified file.

In another implementation of the present embodiment, the view providing module 402 may be configured to: receive a file finding request sent by the user device; and send the classified view to the user device; or, receive a file finding request sent by the user device; send an option of a finding manner to the user device, the finding manner including a classification finding, a search finding or a directory finding; receive the finding manner sent by the user device; and

send the classified view to the user device when the finding manner sent by the user device is the classification finding.

In a further implementation of the present embodiment, the apparatus may further include a receiving module 403 and a file sorting module 404.

The receiving module 403 is configured to receive the identification of the file classifications sent by the user device.

The file sorting module 404 is configured to sort a first file which is the specified file corresponding to the identification of the file classifications sent by the user device, by using an index established for the first file.

The view providing module 402 is further configured to send an arrangement view of the sorted first file to the user device, the arrangement view of the first file including at least a name of the first file.

In the practical application, the arrangement view of the first file may further include one or more of a MIME type of the first file, a size of the first file, a path of the first file, a URL of the first file, a URL of a thumbnail of the first file and a creation time of the first file.

The file sorting module 404 may be configured to: sort the first file according to the creation time of the first file when the first file is a picture; sort the first file according to the name of the first file when the first file is an audio; sort the first file according to the creation time of the first file when the first file is a video; and sort the first file according to a modification time of the first file when the first file is a text.

In a further implementation of the present embodiment, the apparatus may further include a receiving module 403.

The receiving module 403 is configured to receive the finding manner sent by the user device, the finding manner including the classification finding, the search finding or the directory finding.

The view providing module 402 is further configured to find a second file, which is the specified file corresponding to the identification of the device for uploading the file found by the user device, by using an index established for the second file and send an arrangement view of the second file to the user device when the finding manner is the search finding; send a directory structure of the specified file to the user device when the finding manner is the directory finding; and provide the classified view for the user device when the finding manner is the classification finding.

In a further implementation of the present embodiment, the apparatus may further include a file monitoring module 405.

The file monitoring module 405 is configured to monitor a new added file in the storage device.

The index establishing module 401 is further configured to establish an index for the new added file according to the file classifications when the new added file is different from the stored file in the storage device.

The embodiments of the present disclosure establishes an index for a specified file in the storage device according to file classifications which are divided according to file types or an identification of a device for uploading the file; and provides a classified view of the specified file for a user device, the classified view including identifications of the respective file classifications, the file finding manner is combined with the storage device of the router, so that different user devices may more flexibly perform a classification finding when viewing the file in the storage device of the router, for example, different user devices may classify according to file types and the source of the file, whereby it is convenient for the user to find the file in the storage device of the router, the operation is simple and efficient, and the user's experience is good. And, as for the specified file corresponding to different file types, the arrangement view thereof may be listed according to different orders, thereby finding more conveniently, and improving the user's experience. Moreover, the searching and filtering may also be made according to the identification of the device for uploading the file, thereby narrowing the finding range by the user, saving the time found by the user, and further improving the user's experience.

With regard to the apparatus in the above embodiment, detailed description of specific manner for performing operation of modules has been made in the embodiment related to the method, and no detailed illustration will be made herein.

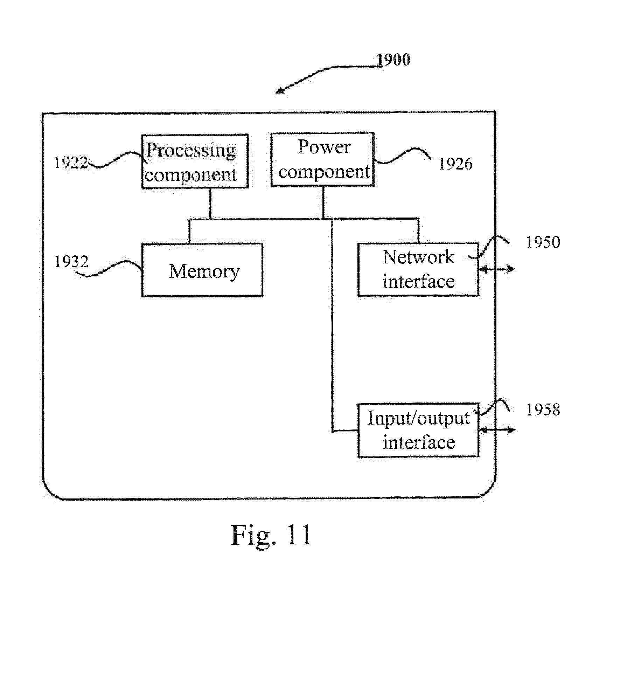

Fig. 11 is a block diagram illustrating an apparatus 1900 for finding a file in a storage device according to an exemplary embodiment. For example, the apparatus 1900 may be provided as a router. Referring to Fig. 11, the apparatus 1900 includes a processing component 1922 that further includes one or more processors, and memory resources represented by a memory 1932 for storing instructions, such as application programs, executable by the processing component 1922. The application programs stored in memory 1932 may include one or more modules, each of which corresponds to a set of instructions. Moreover, the processing component 1922 is configured to execute instructions for performing the above described method.

The apparatus 1900 may also include a power component 1926 configured to perform power management of the apparatus 1900, wired or wireless network interface(s) 1950 configured to connect the apparatus 1900 to a network, and an input/output (I/O) interface 1958. The apparatus 1900 may operate based on an operating system stored in the memory 1932, such as Windows ServerTM, Mac OS XTM, UnixTM, LinuxTM, FreeBSDTM, or the like.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the scope of the invention is as defined by the following claims.

## Claims

1. A method for finding a file in a storage device, **characterized in that**, the method is applied in a router and comprises:
establishing (S101, S201) an index for a specified file in the storage device according to file classifications which are divided according to file types or an identification of a device for uploading files, the storage device being a storage device configured in the router; and
providing (S102, S202) a classified view of the specified file for a user device, the classified view comprising identifications of the respective file classifications.

2. The method according to claim 1, **characterized in that**, the establishing the index for the specified file in the storage device according to the file classifications comprises:
acquiring information of the specified file which comprises one or more of a path of the file, a hash value of the file, a name of the file, a multipurpose Internet mail extensions MIME type of the file, a creation date of the file, a modification time of the file, an identification of the user device, a size of the file and a thumbnail of the file; and
establishing the index respectively for the specified file corresponding to the respective file types and the identification of the device for uploading the file according to the information of the specified file.

3. The method according to claim 1, **characterized in that**, providing the classified view of the specified file for the user device comprises:
receiving a file finding request sent from the user device; and
sending the classified view to the user device;
or
receiving a file finding request sent from the user device;
sending an option of a finding manner to the user device, the finding manner comprising a classification finding, a search finding or a directory finding;
receiving the finding manner sent from the user device; and
sending the classified view to the user device when the finding manner sent from the user device is the classification finding.

4. The method according to any one of claims 1 to 3, **characterized in that**, the method further comprises:
receiving (S203) the identifications of the file classifications sent from the user device;
sorting (S204) a first file, which is the specified file corresponding to the identification of the file classifications sent from the user device, by using an index established for the first file; and
sending (S205) an arrangement view of the sorted first file to the user device, the arrangement view of the first file comprising at least a name of the first file.

5. The method according to claim 4, **characterized in that**, the arrangement view of the first file further comprises one or more of a multipurpose Internet mail extensions MIME type of the first file, a size of the first file, a path of the first file, a uniform resource locator URL of the first file, a URL of a thumbnail of the first file and a creation time of the first file.

6. The method according to claim 4, **characterized in that**, the using the index established for the first file and the sorting the first file comprises:
sorting the first file according to the creation time of the first file when the first file is a picture;
sorting the first file according to the name of the first file when the first file is an audio;
sorting the first file according to the creation time of the first file when the first file is a video;
and
sorting the first file according to a modification time of the first file when the first file is a text.

7. The method according to any one of claims 1 to 3, **characterized in that**, the method further comprises:
receiving the finding manner sent from the user device, the finding manner comprising the classification finding, the search finding or the directory finding;
finding a second file using an index established for the second file which is the specified file corresponding to the identification of the device for uploading the file found by the user device, and sending an arrangement view of the second file to the user device when the finding manner is the search finding;
sending a directory structure of the specified file to the user device when the finding manner is the directory finding; and
providing the classified view for the user device when the finding manner is the classification finding.

8. The method according to any one of claims 1 to 3, **characterized in that**, the method further comprises:
monitoring a new added file in the storage device; and
establishing an index for the new added file according to the file classifications when the new added file is different from the stored file in the storage device.

9. An apparatus for finding a file in a storage device, **characterized in that**, the apparatus is applied in a router and comprises:
an index establishing module (301) configured to establish an index for a specified file in the storage device according to file classifications which are divided according to file types or an identification of a device for uploading the file, the storage device being a storage device configured in the router; and
a view providing module (302) configured to provide a classified view of the specified file for a user device, the classified view comprising identifications of the respective file classifications.

10. The apparatus according to claim 9, **characterized in that**, the index establishing module (301) is configured to:
acquire information of the specified file which comprises one or more of a path of the file,
a hash value of the file, a name of the file, a multipurpose Internet mail extensions MIME type of the file, a creation date of the file, a modification time of the file, an identification of the user device, a size of the file and a thumbnail of the file; and
establish the index respectively for the specified file corresponding to the respective file types and the identification of the device for uploading the file according to the information of the specified file.

11. The apparatus according to claim 9, **characterized in that**, the view providing module (302) is configured to:
receive a file finding request sent from the user device; and
send the classified view to the user device;
or,
receive a file finding request sent from the user device;
send an option of a finding manner to the user device, the finding manner comprising a classification finding, a search finding or a directory finding;
receive the finding manner sent from the user device; and
send the classified view to the user device when the finding manner sent from the user device is the classification finding.

12. The apparatus according to any one of claims 9 to 11, **characterized in that**, the apparatus further comprises:
a receiving module (403) configured to receive the identification of the file classifications sent from the user device;
a file sorting module (404) configured to sort a first file which is the specified file corresponding to the identification of the file classifications sent from the user device by using an index established for the first file; and
wherein the view providing module (302) is further configured to send an arrangement view of the sorted first file to the user device, the arrangement view of the first file comprising at least a name of the first file.

13. The apparatus according to any one of claims 9 to 11, **characterized in that**, the apparatus further comprises:
a receiving module (403) configured to receive the finding manner sent from the user device, the finding manner comprising the classification finding, the search finding or the directory finding; and
wherein the view providing module (302) is further configured to find a second file, which is the specified file corresponding to the identification of the device for uploading the file found by the user device, by using an index established for the second file and send an arrangement view of the second file to the user device when the finding manner is the search finding;
send a directory structure of the specified file to the user device when the finding manner is the directory finding; and provide the classified view for the user device when the finding manner is the classification finding.

14. The apparatus according to any one of claims 9 to 11, **characterized in that**, the apparatus further comprises:
a file monitoring module (405) configured to monitor a new added file in the storage device;
and
the index establishing module (401) is further configured to establish an index for the new added file according to the file classifications when the new added file is different from the stored file in the storage device.

15. A computer program product stored on a computer usable medium, comprising computer-readable program means for causing an intelligent terminal to implement the method according to any one of claims 1 to 8.
